# EUROPEAN PATENT SPECIFICATION

(11) **EP 3 382 729 B1**
(45) Date of publication and mention of the grant of the patent: **01.12.2021**
(21) Application number: 16868182.3
(22) Date of filing: 27.10.2016
(51) Int. Cl.: H01G 11/48, H01G 11/06, H01G 11/86, H01M 4/137, H01M 4/1399, H01M 4/60, H01M 10/052, H01M 10/0566, H01G 11/50, H01M 10/0525, H01M 10/0569, H01M 10/058, H01G 11/60, H01G 11/62, H01M 4/02

(54) **ELECTROCHEMICAL DEVICE AND METHOD FOR MANUFACTURING SAME**
ELEKTROCHEMISCHE VORRICHTUNG UND VERFAHREN ZUR HERSTELLUNG DAVON
DISPOSITIF ÉLECTROCHIMIQUE ET PROCÉDÉ PERMETTANT DE FABRIQUER CE DERNIER

(30) Priority: 27.11.2015 JP 2015232340
(43) Date of publication of application: 03.10.2018
(73) Proprietor: Panasonic Intellectual Property Management Co., Ltd., Osaka-shi, Osaka 540-6207 (JP)
(72) Inventor: NOMOTO, Susumu, Osaka-shi, Osaka 540-6207 (JP); ITO, Yasuyuki, Osaka-shi, Osaka 540-6207 (JP); MATSUMURA, Nao, Osaka-shi, Osaka 540-6207 (JP); HAYASHI, Hiroki, Osaka-shi, Osaka 540-6207 (JP); AKUTSU, Makoto, Kadoma-shi, Osaka 571-8501 (JP); ENDOU, Tougo, Osaka-shi, Osaka 540-6207 (JP)
(74) Representative: Vigand, Philippe
(86) International application number: PCT/JP2016/004724
(87) International publication number: WO 2017/090231

(56) References cited:
- WO-A1-2007/052762
- WO-A1-2012/050104
- JP-A- 2000 030 692
- JP-A- 2000 030 692
- JP-A- 2012 226 961
- US-A1- 2015 325 883

## Description

### TECHNICAL FIELD

The present invention relates to an electrochemical device in which a positive electrode having a positive electrode material layer containing a conductive polymer and a negative electrode having a negative electrode material layer storing and releasing lithium ions are combined.

### BACKGROUND

The electrochemical device that stores electric energy can be roughly classified into a high-capacitance electrochemical device performing charging and discharging by a faradaic reaction and a high-output electrochemical device performing charging and discharging by a non-faradaic reaction. As the high-capacitance electrochemical device, a lithium ion secondary battery has been getting a mainstream. On the other hand, a typical device as the high-output electrochemical device is an electric double layer capacitor.

In recent years, an electrochemical device having intermediate property between the lithium ion secondary battery and the electric double layer capacitor also attracts attention (refer to PTL 1). For example, a lithium ion capacitor has a structure in which a positive electrode used in the electric double layer capacitor and a negative electrode used in the lithium ion secondary battery are combined, and has both property of the former and property of the latter. However, the positive electrode used for the electric double layer capacitor is a polarizable electrode and has a small capacity. Therefore, it is difficult in many cases to achieve a required high capacity as long as such a positive electrode is used.

On the other hand, it is investigated to use, as a positive electrode material, a conductive polymer which allows a faradaic reaction to proceed in association with the adsorption (doping) and desorption (dedoping) of the anion (refer to PTL 2 to PTL 4). The positive electrode containing the conductive polymer has an adequately large capacity compared with a polarizable electrode and an adequately high output compared with a positive electrode used in a common lithium ion secondary battery.

In the adsorption and desorption of the anion, the conductive polymer does not greatly change its structure. Therefore, structural degradation of the conductive polymer is small. Thus, the conductive polymer is suitable for a long-life electrochemical device. Further, since the conductive polymer does not contain oxygen internally, a thermal runaway is unlikely to occur, and thus high safety can be expected.

### Citation List

### Patent Literatures

PTL 1: International Publication No. WO 2011/058748
PTL 2: Unexamined Japanese Patent Publication No. S64-21873
PTL 3: Unexamined Japanese Patent Publication No. H01-132051
PTL 4: Unexamined Japanese Patent Publication No. 2014-123641

### SUMMARY

However, in order to maintain high conductivity in the conductive polymer, it is necessary to stabilize anions with which the conductive polymer is doped. In the meanwhile, in order to stably repeat charging and discharging, it is necessary that internal resistance is kept low, and doping and dedoping of the anions in and from the conductive polymer can be easily performed. Document JP2000030692 discloses such a device according to the preamble of claim 1.

In view of the above, one aspect of the present invention pertains to an electrochemical device including a positive electrode having a positive electrode material layer containing a conductive polymer doped with a first anion and a second anion, a negative electrode having a negative electrode material layer storing and releasing lithium ions, and a nonaqueous electrolytic solution having lithium ionic conductivity. The second anion is more easily dedoped from the conductive polymer than the first anion. At an end period of charge of the electrochemical device, a number of moles M1 of the first anion and a number of moles M2 of the second anion respectively doped in the conductive polymer satisfy a relationship of M1 < M2. At an end period of discharge of the electrochemical device, a number of moles M3 of the first anion and a number of moles M4 of the second anion respectively doped in the conductive polymer satisfy a relationship of M3 > M4.

Another aspect of the present invention pertains to a method for manufacturing an electrochemical device including: a step of forming a positive electrode having a positive electrode material layer containing a conductive polymer; a step of forming a negative electrode having a negative electrode material layer storing and releasing lithium ions; and a step of immersing the positive electrode and the negative electrode in a nonaqueous electrolytic solution having lithium ionic conductivity. The step of forming a positive electrode includes: a step of polymerizing a polymerizable compound which is a raw material of the conductive polymer in a first solution containing a first anion so as to obtain the conductive polymer doped with the first anion; and a step of doping a second anion in the conductive polymer doped with the first anion in a second solution containing the second anion which is more easily dedoped from the conductive polymer than the first anion, and wherein the first anion and the second anion are doped so that:
a number of moles M1 of the first anion and a number of moles M2 of the second anion respectively doped in the conductive polymer satisfy a relationship of M1 < M2 at an end period of charge of the electrochemical device, and
a number of moles M3 of the first anion and a number of moles M4 of the second anion respectively doped in the conductive polymer satisfy a relationship of M3 > M4 at an end period of discharge of the electrochemical device.

Another aspect of the present invention pertains to a method for manufacturing an electrochemical device including: a step of forming a positive electrode having a positive electrode material layer containing a conductive polymer; a step of forming a negative electrode having a negative electrode material layer storing and releasing lithium ions; and a step of immersing the positive electrode and the negative electrode in a nonaqueous electrolytic solution having lithium ionic conductivity. The step of forming a positive electrode includes a step of polymerizing a polymerizable compound which is a raw material of the conductive polymer in a first solution containing a first anion so as to obtain the conductive polymer doped with the first anion. The nonaqueous electrolytic solution contains a second anion which is more easily dedoped from the conductive polymer than the first anion. The step of immersing the positive electrode and the negative electrode in the nonaqueous electrolytic solution includes a step of doping the second anion in the conductive polymer doped with the first anion in the nonaqueous electrolytic solution. Wherein the first anion and the second anion are doped so that: a number of moles M1 of the first anion and a number of moles M2 of the second anion respectively doped in the conductive polymer satisfy a relationship of M1 < M2 at an end period of charge of the electrochemical device, and a number of moles M3 of the first anion and a number of moles M4 of the second anion respectively doped in the conductive polymer satisfy a relationship of M3 > M4 at an end period of discharge of the electrochemical device.

According to the present invention, it is possible to attain an electrochemical device in which a positive electrode having a positive electrode material layer containing a conductive polymer and a negative electrode having a negative electrode material layer storing and releasing lithium ions are combined, the electrochemical device having excellent reliability and being able to charge and discharge stably over a long period.

### BRIEF DESCRIPTION OF DRAWINGS

FIG. 1 is a schematic sectional view illustrating an electrochemical device according to an exemplary embodiment of the present invention.
FIG. 2 is a schematic view for illustrating a configuration of the electrochemical device according to the exemplary embodiment.

### DESCRIPTION OF EMBODIMENT

An electrochemical device according to the present invention includes a positive electrode having a positive electrode material layer containing a conductive polymer doped with a first anion and a second anion, a negative electrode having a negative electrode material layer storing and releasing lithium ions, and a nonaqueous electrolytic solution having lithium ionic conductivity. The second anion is more easily dedoped from the conductive polymer than the first anion.

In the electrochemical device at the end of charge, a number of moles M1 of the first anion and a number of moles M2 of the second anion respectively doped in the conductive polymer are configured to satisfy a relationship of M1 < M2 from the viewpoint of ensuring a high capacitance. In this time, M2/M1 is preferably 1 or more, and more preferably 3 or more. On the other hand, in the electrochemical device at the end of discharge, a number of moles M3 of the first anion and a number of moles M4 of the second anion respectively doped in the conductive polymer are configured to satisfy a relationship of M3 > M4. This means that the second anion is mainly doped or dedoped in or from the conductive polymer in association with charging and discharging. In other words, the second anion mainly plays a role of exerting a faradaic reaction in association with charging and discharging.

Further, an amount of the first anion doped in the conductive polymer does not greatly vary in association with charging and discharging. The first anion plays a role of imparting conductivity to the conductive polymer. Therefore, a difference between M1 and M3 is small, and the difference between M1 and M3 (|M3 - M1|) with respect to M1 is, for example, within ±10%.

The conductive polymer is preferably a π-conjugated polymer having a repeating unit containing a heteroatom. The heteroatom (nitrogen atom, sulfur atom, etc.) in the π-conjugated polymer tends to interact with an anion. It is thought that the anion adsorbs to or releases from the heteroatom in oxidation-reduction of the conductive polymer.

From the viewpoint of enhancing the stability of the first anion doped in the conductive polymer, a number of moles (Mₓ) of the first anion doped in the conductive polymer per mole of the heteroatom is preferably small during the time from an end period of charge to an end period of discharge. Mₓ is preferably, for example, 0.1 moles or less. However, when the Mₓ is too small, conductivity of the conductive polymer is lowered and internal resistance of the electrochemical device is increased. Therefore, Mₓ is preferably 0.001 moles or more, and more preferably 0.01 moles or more.

Herein, in the present invention, the end period of charge means a period being in a state in which a depth of discharge (ratio of a discharge amount to a capacitance at the time of full charge) of an electrochemical device is 10% or less. And a voltage between terminals at the time of charging before reaching this state is an end-of-charge voltage. Further, the end period of discharge means a period being in a state in which a depth of discharge of an electrochemical device is 90% or more. And a voltage between terminals at the time of discharging before reaching this state is an end-of-discharge voltage. The end-of-charge voltage and the end-of-discharge voltage can be defined according to a design of the electrochemical device so that the depth of discharge ranges from 0% to 10%, inclusive and 90% to 100%, inclusive, respectively. When the π-conjugated polymer is used as the conductive polymer, and a carbon material capable of insertion or desorption of the lithium ion is used as the negative electrode material, for example, the end-of-charge voltage is defined in a range from 3.7 V to 3.9 V, inclusive, and the end-of-discharge voltage is defined in a range from 2.0 V to 2.6 V, inclusive. When the π-conjugated polymer is used as the conductive polymer, and lithium titanate capable of insertion or desorption of the lithium ion is used as the negative electrode material, for example, the end-of-charge voltage is defined in a range from 2.4 V to 2.6 V, inclusive, and the end-of-discharge voltage is defined in a range from 1.6 V to 2.2 V, inclusive. That is, the end-of-charge voltage and the end-of-discharge voltage are determined by a combination of the positive electrode material and the negative electrode material.

Hereinafter, each constituent of the electrochemical device will be described in more detail.

### (Positive electrode)

The positive electrode has a positive electrode material layer in which an oxidation-reduction reaction involving doping and dedoping of the second anion is advanced. The positive electrode material layer is usually supported on a positive current collector. For example, a conductive sheet material is used for the positive current collector. As the sheet material, a metal foil, a metal porous body, a punching metal or the like is used. As a material of the positive current collector, aluminum, an aluminum alloy, nickel, titanium or the like can be used.

The positive electrode material layer contains a conductive polymer as a positive electrode active material. As the conductive polymer, a π-conjugated polymer is preferred, and polypyrrole, polythiophene, polyfuran, polyaniline, polythiophene vinylene, polypyridine, and derivatives thereof can be used. These conductive polymers may be used alone, or may be used in combination of two or more of the conductive polymers. A weight average molecular weight of the conductive polymer is not particularly limited and ranges, for example, from 1000 to 100000, inclusive.

In addition, the derivatives of polypyrrole, polythiophene, polyfuran, polyaniline and the like of the π-conjugated polymer mean polymers having, as a basic skeleton, polypyrrole, polythiophene, polyaniline, polythiophene vinylene, polypyridine and the like, respectively. For example, polythiophene derivative includes poly(3,4-ethylenedioxythiophene) (PEDOT) and the like.

The conductive polymer exerts excellent conductivity by doping a dopant. Herein, as described above, a conductive polymer is used which contains, as dopants, a first anion and a second anion with a predetermined balance at the end periods of charge and discharge.

The first anion is an anion which is relatively hardly dedoped from the conductive polymer, and is preferably an oxo acid anion not containing a halogen atom. Examples of the oxo acid anion not containing a halogen atom include a sulfate ion, a nitrate ion, a phosphate ion, a borate ion, a sulfonate ion, and the like. Examples of the sulfonate ion include a benzenesulfonate ion, methanesulfonic acid, toluenesulfonic acid, and the like. Among these oxo acid anions, a sulfate ion, a sulfonate ion and the like are preferred in that these tend to be stable in the conductive polymer. These ions may be used alone, or may be used in combination of two or more of the ions.

The first anion may be a polymer ion. Examples of a first anion of a polymer include ions of polyvinylsulfonic acid, polystyrenesulfonic acid, polyallylsulfonic acid, polyacrylsulfonic acid, polymethacrylsulfonic acid, poly(2-acrylamido-2-methylpropanesulfonic acid), polyisoprenesulfonic acid, and polyacrylic acid. These polymers may be a homopolymer or a copolymer of two or more monomers. These polymers may be used alone, or may be used in combination of two or more of these polymers. However, the first anion of a polymer is used, a number of moles of an anionic group (sulfonate group, acrylate group, etc.) is treated as a number of moles of the first anion.

The second anion may be an anion which is more easily dedoped from the conductive polymer than the first anion. Examples of the second anion include ClO₄⁻, BF₄⁻, PF₆⁻, AlCl₄⁻, SbF₆⁻, SCN⁻, CF₃SO₃⁻, FSO₃⁻, CF₃CO₂⁻, AsF₆⁻, B₁₀Cl₁₀⁻, Cl⁻, Br⁻, I⁻, BCl₄⁻, N(FSO₂)₂⁻, N(CF₃SO₂)₂⁻ and the like. Among these anions, oxo acid anions containing a halogen atom are preferred, and imide anion and the like are preferred. As the oxo acid anion containing a halogen atom, tetrafluoroborate anion (BF₄⁻), hexafluorophosphate anion (PF₆⁻), perchloric acid anion (ClO₄⁻), fluorosulfate anion (FSO₃⁻), and the like are preferred. As the imide anion, bis(fluorosulfonyl)imide anion (N(FSO₂)₂⁻) is preferred. These anions may be used alone, or may be used in combination of two or more of these anions.

### (Negative electrode)

The negative electrode has a negative electrode material layer in which an oxidation-reduction reaction involving storing and releasing of the lithium ion is advanced. The negative electrode material layer is usually supported on a negative current collector. For example, a conductive sheet material is used for the negative current collector. As the sheet material, a metal foil, a metal porous body, a punching metal or the like is used. As a material of the negative current collector, copper, a copper alloy, nickel, stainless steel or the like can be used.

For the negative electrode material layer, a material which electrochemically stores and releases lithium ions is used as the negative electrode active material. Examples of such a material include a carbon material, a metal compound, an alloy, a ceramic material and the like. As the carbon material, graphite, non-graphitizable carbon (hard carbon), and easily graphitizable carbon (soft carbon) are preferred, and graphite and hard carbon are particularly preferred. Examples of the metal compound include silicon oxide, tin oxide and the like. Examples of the alloy include a silicon alloy, a tin alloy and the like. Examples of the ceramic material include lithium titanate, lithium manganate, and the like. These materials may be used alone, or may be used in combination of two or more of these materials. Among these materials, a carbon material can achieve low potential of the negative electrode, and thus is preferred.

The negative electrode material layer preferably contains a conducting agent, a binder and the like beside the negative electrode active material. Examples of the conducting agent include carbon black, carbon fibers, and the like. Examples of the binder include a fluorine resin, an acrylic resin, a rubber material, a cellulose derivative, and the like. Examples of the fluorine resin include polyvinylidene fluoride, polyterafluoroethylene, terafluoroethylene-hexafluoropropylene copolymer, and the like. Examples of the acrylic resin include polyacrylic acid, acrylic acid-methacrylic acid copolymer, and the like. Examples of the rubber material include a styrene-butadiene rubber, and examples of the cellulose derivative include carboxymethyl cellulose.

The lithium ion is preferably pre-doped in the negative electrode in advance. Thereby, a potential of the negative electrode is lowered, and therefore a difference in potential between the positive electrode and the negative electrode (that is, a voltage) is increased and energy density of the electrochemical device is improved.

Pre-doping of lithium ions in the negative electrode is advanced, for example, by forming a metal lithium film serving as a supply source of a lithium ion on the surface of the negative electrode material layer, and impregnating the negative electrode having the metal lithium film with the nonaqueous electrolytic solution having lithium ionic conductivity. In this time, the lithium ion is eluted in the nonaqueous electrolytic solution from the metal lithium film and the eluted lithium ion is stored in the negative electrode active material. For example, when graphite or hard carbon is used as the negative electrode active material, lithium ions are inserted in the interlayer of the graphite or the fine pores of the hard carbon. An amount of lithium ion to be pre-doped can be controlled by a mass of the metal lithium film.

A method of forming the metal lithium film on the surface of the negative electrode material layer may be a method of bonding a metal lithium foil to the negative electrode material layer, or may be a method of depositing a lithium film on the surface of the negative electrode material layer applying a vapor phase method. The vapor phase method is, for example, a method of using a vacuum deposition apparatus, and a thin film of metal lithium can be formed by evaporating metal lithium in an apparatus in which a degree of vacuum is enhanced and depositing the metal lithium on the surface of the negative electrode material layer.

### (Nonaqueous electrolytic solution)

The nonaqueous electrolytic solution having lithium ionic conductivity includes a lithium salt and a nonaqueous solvent in which the lithium salt is dissolved. In this time, when a salt containing the second anion is used as the lithium salt, it becomes possible to reversibly repeat doping and dedoping of the second anion in and from the positive electrode. On the other hand, lithium ions derived from the lithium salt are stored in the negative electrode.

Examples of the lithium salt include LiClO₄, LiBF₄, LiPF₆, LiAlCl₄, LiSbF₆, LiSCN, LiCF₃SO₃, LiFSO₃, LiCF₃CO₂, LiAsF₆, LiB₁₀Cl₁₀, LiCl, LiBr, LiI, LiBCl₄, LiN(FSO₂)₂, LiN(CF₃SO₂)₂ and the like. These lithium compounds may be used alone, or may be used in combination of two or more of these lithium compounds. Among these lithium compounds, at least one selected from the group consisting of lithium salts having the oxo acid anion containing a halogen atom which is suitable for the second anion and lithium salts having the imide anion, are preferably used. A concentration of the lithium salt in the nonaqueous electrolytic solution may range, for example, from 0.2 mol/L to 4 mol/L, inclusive and is not particularly limited.

Examples of the nonaqueous solvent include cyclic carbonates such as ethylene carbonate, propylene carbonate, and butylene carbonate; chain carbonates such as dimethyl carbonate, diethyl carbonate, and ethyl methyl carbonate; aliphatic carboxylate esters such as methyl formate, methyl acetate, methyl propionate, and ethyl propionate; lactones such as γ-butyrolactone and γ-valerolactone; chain ethers such as 1,2-dimethoxyethane (DME), 1,2-diethoxyethane (DEE) and ethoxymethoxyethane (EME); cyclic ethers such as tetrahydrofuran and 2-methyltetrahydrofuran; dimethylsulfoxide, 1,3-dioxolane, formamide, acetamide, dimethylformamide, dioxolane, acetonitrile, propionitrile, nitromethane, ethylmonoglyme, trimethoxymethane, sulfolane, methyl sulfolane, 1,3-propanesultone or the like can be used. These compounds may be used alone, or may be used in combination of two or more of these compounds.

An additive may be contained in the nonaqueous electrolytic solution, and contained in the nonaqueous solvent as required. For example, unsaturated carbonate such as vinylene carbonate, vinyl ethylene carbonate, and divinyl ethylene carbonate may be added as an additive for forming a coating having high lithium ionic conductivity on the surface of the negative electrode.

A group of electrodes in laminate type or wound type is formed by laminating a positive electrode and a negative electrode with a separator interposed between the positive electrode and the negative electrode or by winding a belt-shaped positive electrode and a belt-shaped negative electrode with a separator interposed between the positive electrode and the negative electrode. As a material of the separator, a nonwoven fabric made of cellulose fiber, a nonwoven fabric made of glass fiber, a microporous membrane made of polyolefin, a fabric cloth, a nonwoven fabric or the like is preferably used. A thickness of the separator is, for example, 10 µm to 300 µm, inclusive, and preferably 10 µm to 40 µm, inclusive.

Next, one example of a method for manufacturing an electrochemical device will be described. In the following examples, it is easy to control a quantitative balance between the first anion and the second anion respectively doped in the conductive polymer. However, the method for manufacturing an electrochemical device is not limited to the following examples.

### (i) Step of forming positive electrode

The conductive polymer contained in the positive electrode material layer of the positive electrode is synthesized by polymerizing a polymerizable compound (monomer) serving as a raw material of the conductive polymer. Synthesis of the conductive polymer may be performed by electrolytic polymerization or may be performed by chemical polymerization. In this time, the conductive polymer doped with first anions can be obtained by polymerizing the monomer in the first solution containing the first anions. For example, a conductive sheet material (e.g., metal foil) is prepared as a positive current collector, the positive current collector and the counter electrode are immersed in the first solution. By applying a current between the positive current collector as an anode and the counter electrode, a film of a conductive polymer doped with the first anions is formed so as to cover at least part of the surface of the positive current collector.

The first solution is formed by dissolving a supporting electrolyte containing the first anion in a solvent. As the solvent, water may be used, but the nonaqueous solvent may be used in consideration of a solubility of a monomer. As the nonaqueous solvent, alcohols such as ethyl alcohol, methyl alcohol, isopropyl alcohol, ethylene glycol and propylene glycol are preferably used. As the supporting electrolyte, a conjugated acid of the first anion or an alkali metal salt containing the first anion (sodium salt, potassium salt, etc.) may be used. Specifically, an acid aqueous solution formed by dissolving sulfuric acid, sodium sulfate, phosphoric acid, dibasic sodium phosphate or the like is preferably used as the first solution. It is preferred that the first solution is controlled so as to have a pH ranging from 0 to 4, inclusive, and a temperature ranging from 0°C to 45°C, inclusive. A current density is not particularly limited; however, preferably it ranges from 1 mA/cm² to 100 mA/cm², inclusive. It is preferred to dissolve a polymerizable compound (monomer) in the first solution at a concentration ranging from 0.1 mol/L to 3 mol/L, inclusive. A concentration of the first anion ranges preferably from 0.1 mol/L to 5 mol/L, inclusive.

Next, a second anion is doped in the conductive polymer doped with the first anions in a second solution containing the second anions. For example, the positive current collector having a film of the conductive polymer doped with the first anion and the current collector are immersed in the second solution. By applying a potential more noble than that of the counter electrode to the positive current collector, the second anion is further doped in the film of the conductive polymer doped with the first anion. Thereby, it is possible to form a positive electrode material layer containing a conductive polymer doped with first anions and second anions in a state of being supported on the positive current collector.

The second solution is formed by dissolving a supporting electrolyte containing the second anion in a solvent. As the solvent, water may be used, but the nonaqueous solvent is used when the second anion is unstable in water. As the supporting electrolyte, a conjugated acid of the second anion or an alkali metal salt containing the second anion (sodium salt, potassium salt, lithium salt, etc.) may be used. As the second solution, a nonaqueous electrolytic solution containing the second anion which is used for an electrochemical device described later may be used. The supporting electrolyte at this time is a lithium salt dissolved in the nonaqueous electrolytic solution. With respect to conditions in doping the second anion, a temperature of the second solution is preferably controlled so as to be a range from 40°C to 80°C, inclusive. A potential to be applied to the positive current collector may be a range from 3.5 V to 4.2 V, inclusive, with respect to the metal lithium. A concentration of the second anion is preferably a range from 0.1 mol/L to 4 mol/L, inclusive.

As described above, by doping the first anion and the second anion in the conductive polymer so as to separate a step of doping of the first anion and a step of doping of the second anion which are performed as different steps from each other, it is easy to control a quantitative balance between the first anion and the second anion.

In addition, in the above described step of synthesizing the conductive polymer, the electrolytic polymerization is performed, but the conductive polymer may be synthesized by the chemical polymerization. And the first anion may be doped in the conductive polymer after synthesizing a conductive polymer not containing the first anion.

When the second anion is doped in the conductive polymer doped with the first anions in the nonaqueous electrolytic solution, a group of electrodes may be assembled before the step of doping the second anion is performed, and then the group of electrodes may be housed in a case of the electrochemical device together with the nonaqueous electrolytic solution. In this case, by applying a charge voltage to the group of electrodes so that a positive potential becomes higher, the second anion is doped in the conductive polymer. On the other hand, part of the lithium ions is further doped in the negative electrode. Therefore, considering an amount of the second anion to be doped in the conductive polymer, a concentration of the lithium salt contained in the nonaqueous electrolytic solution is preferably set to a range from 0.1 mol/L to 4 mol/L, inclusive.

The step of removing part of the first anion from the conductive polymer doped with the first anion may be performed prior to the step of doping the second anion in the conductive polymer. Thereby, a site of the conductive polymer in which the second anion contributing to charging and discharging can be doped is increased. Therefore, an electrochemical device having a higher capacitance can be attained. Further, by removing part of the first anion, it becomes easy to allow part of the second anion to remain in a state of being doped in the conductive polymer at the end period of discharge. Furthermore, when part of the first anion is removed, the first anion doped in the conductive polymer in a relatively unstable state is easily removed earlier. It is thought that the first anion remaining in a state of being doped in the conductive polymer without being removed is able to still keep on stably remaining in the conductive polymer.

The step of removing part of the first anion can be performed subsequent to the step of synthesizing the conductive polymer doped with the first anions. For example, by applying the reverse current which brings the positive current collector into a cathode between the counter electrode and the positive current collector in a state of being immersed in the first solution, the positive current collector having a film of the conductive polymer doped with the first anion, the conductive polymer is reduced and part of the first anion is dedoped. Also, it is possible to dedope the first anion by similarly applying the reverse current in a solution different from the first solution. A current density (I₁) of the reverse current is preferably lower than a current density (I₀) at the time of synthesizing the conductive polymer doped with the first anion, and I₁ is preferably controlled so as to be a range from 5% to 50% of I₀, inclusive. In this time, when the conductive polymer is a π-conjugated polymer containing a heteroatom, it is preferred to reduce the conductive polymer until a number of moles (Mₓ) of the first anion per mole of the heteroatom becomes 0.1 moles or less.

### (ii) Step of forming negative electrode

The negative electrode material layer of the negative electrode is formed, for example, by preparing a negative electrode mixture paste as a mixture of a negative electrode active material, a conducting agent, a binder and a dispersing medium, and applying the negative electrode mixture paste onto the positive current collector. For the dispersing medium, water, N-methyl-2-pyrrolidone (NMP) or the like is preferably used. Thereafter, an applied film is preferably pressed between rollers in order to enhance strength of the negative electrode material layer.

A step of pre-doping lithium ions in the negative electrode may be performed before assembling the group of electrodes, or pre-doping may be advanced after housing the group of electrodes in a case of the electrochemical device together with the nonaqueous electrolytic solution. In the latter case, the metal lithium film is previously formed on the surface of the negative electrode, and then the group of electrodes may be prepared.

### (iii) Step of immersing a group of electrodes in nonaqueous electrolytic solution

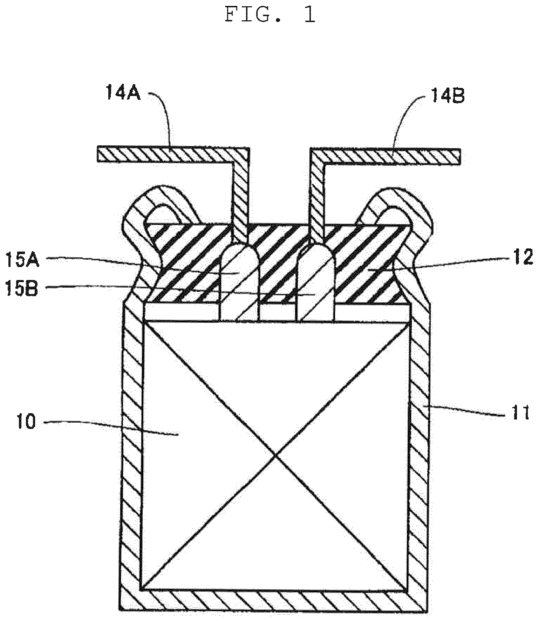

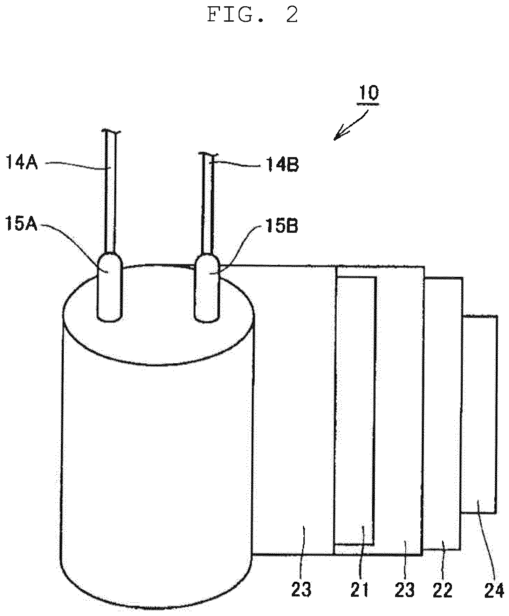

The group of electrodes is housed in, for example, a bottomed case having an opening together with the nonaqueous electrolytic solution. Thereafter, the opening is blocked with a sealing body to complete an electrochemical device. FIG. 1 is a schematic sectional view illustrating one example of an electrochemical device, and FIG. 2 is a schematic view illustrating a partial development of the electrochemical device.

Group of electrodes 10 is a wound body as shown in FIG. 2 and includes positive electrode 21, negative electrode 22, and separator 23 interposed between positive electrode 21 and negative electrode 22. An outermost periphery of the wound body is fixed by fastening tape 24. Positive electrode 21 is connected to lead tab 15A and negative electrode 22 is connected to lead tab 15B. The electrochemical device includes group of electrodes 10, bottomed case 11 housing group of electrodes 10, sealing body 12 for blocking the opening of bottomed case 11, lead wires 14A, 14B led out from sealing body 12, and the nonaqueous electrolytic solution (not shown). Lead wires 14A, 14B are connected to lead tabs 15A, 15B, respectively. Sealing body 12 is formed of, for example, an elastic material including a rubber component. Bottomed case 11 is, at a part near an opening end, processed inward by drawing, and is, at the opening end, curled to swage sealing body 12.

In the exemplary embodiment described above, a wound electrochemical device having a cylindrical shape has been described. The application range of the present invention, however, is not limited to the wound electrochemical device and can also be applied to a square or a laminate type electrochemical device.

### EXAMPLES

Hereinafter, the present invention will be described in more detail with reference to examples; however, the present invention is not to be considered to be limited to the examples.

### <<Example 1>>

### (1) Preparation of positive electrode

An aluminum foil having a thickness of 30 µm was prepared as a positive current collector. On the other hand, as a first solution, a solution containing aniline at concentration of 1 mol/L and sulfuric acid at concentration of 2 mol/L was prepared. The first solution was adjusted to a pH of 0.6 and a temperature of 25°C.

A positive current collector and a stainless steel counter electrode were immersed in the first solution. And then electrolytic polymerization at a current density of 10 mA/cm² for 20 minutes was conducted to deposit a film of a conductive polymer (polyaniline) doped with sulfate ions (SO₄²⁻) as the first anion on both entire front surface and entire back surface of the positive current collector.

The positive current collector having the film of the conductive polymer doped with sulfate ions and the counter electrode were taken out from the first solution, and then immersed in a 0.1 mol/L sulfuric acid aqueous solution. Next, a reverse current of a current density of 1 mA/cm² was applied between the positive current collector and the stainless steel counter electrode for 20 minutes. Thereby, the conductive polymer was reduced to dedope part of the sulfate ions that have been doped in the conductive polymer. In this manner, a conductive polymer film doped with a predetermined amount of first anions was formed. A thickness of the conductive polymer film was 60 µm at each of the front surface and the back surface of the positive current collector. The conductive polymer film was adequately washed with water, and then subjected to vacuum drying at 100°C for 12 hours.

### (2) Preparation of negative electrode

A copper foil having a thickness of 20 µm was prepared as a negative current collector. On the other hand, carbon paste was prepared by kneading mixed powder and water at a weight ratio of 40 : 60. The mixed powder was a mixture of hard carbon of 97 parts by mass, carboxy cellulose of 1 part by mass, and styrene butadiene rubber of 2 parts by mass. The carbon paste was applied on both surfaces of the negative current collector and dried to obtain a negative electrode having a negative electrode material layer with a thickness of 35 µm on each of both surfaces. Next, a metal lithium foil was attached to the negative electrode material layer. An amount of the metal lithium foil was calculated so that a negative potential in the nonaqueous electrolytic solution after completion of pre-doping is 0.2 V or less with respect to metal lithium.

### (3) Group of electrodes

After a lead tab was connected to each of the positive electrode and the negative electrode, as shown in FIG. 2, a separator of a cellulose nonwoven fabric (thickness 35 µm), the positive electrode, and the negative electrode were alternately laminated to obtain a laminate, and a group of electrodes was formed by winding the laminate.

### (4) Nonaqueous electrolytic solution

Vinylene carbonate of 0.2 % by mass was added to a mixture of propylene carbonate and dimethyl carbonate at a volume ratio of 1 : 1 to prepare a nonaqueous solvent. LiPF₆ was dissolved in the resulting nonaqueous solvent in a concentration of 2 mol/L to prepare a nonaqueous electrolytic solution having hexafluorophosphate anions (PF₆⁻) as the second anion.

### (5) Preparation of electrochemical device

The group of electrodes and the nonaqueous electrolytic solution were housed in a bottomed case having an opening. And an electrochemical device as shown in FIG. 1 was assembled. Thereafter, the electrochemical device was subjected to aging at 25°C for 24 hours while applying a charge voltage of 3.8 V between the terminal of the positive electrode and the terminal of the negative electrode to advance pre-doping of lithium ions in the negative electrode. Subsequently, the electrochemical device was heated at 60°C for 24 hours while applying a charge voltage of 3.6 V between the terminal of the positive electrode and the terminal of the negative electrode to dope, in the conductive polymer, part of the second anion dissolved in the nonaqueous electrolytic solution. In this manner, an electrochemical device (A1) having, as a positive electrode material layer, a conductive polymer film containing the second anion together with the first anion was completed. A voltage between terminals electrochemical device (A1) was 3.2 V.

### <<Example 2>>

An electrochemical device (A2) was prepared in the same manner as in Example 1 except that in the preparation of the positive electrode material layer, the condition of reducing the conductive polymer by the reverse current was changed a condition of reducing at a current density of 2 mA/cm² for 15 minutes.

### <<Comparative Example 1>>

An electrochemical device (B1) was prepared in the same manner as in Example 1 except that in the preparation of the positive electrode material layer, the condition of reducing the conductive polymer by the reverse current was changed to a condition of reducing at a current density of 5 mA/cm² for 120 minutes.

### <<Comparative Example 2>>

An electrochemical device (B2) was prepared in the same manner as in Example 1 except that in the preparation of the positive electrode material layer, an operation of removing part of the first anion, that is, reducing the conductive polymer by the reverse current was not carried out.

### <<Comparative Example 3>>

An electrochemical device (B3) was prepared in the same manner as in Example 1 except that an operation of heating at 60°C for 24 hours while applying a charge voltage of 3.6 V between a terminal of a positive electrode and a terminal of a negative electrode, that is, doping of the second anion in the conductive polymer was not carried out.

### [Evaluation]

### <Amount of dopant>

Immediately after completion of the electrochemical device at the time when a voltage between terminals was 3.2 V, the electrochemical device was disassembled. The positive electrode was taken out from the electrochemical device, and an amount of the dopant contained in the positive electrode material layer was measured. From an amount of the first anion (SO₄²⁻) at this time, a number of moles (Mₓ) of the first anion per mole of the heteroatom (i.e., nitrogen atom) in polyaniline (that is, per mole of polyaniline) was determined. Similarly, a number of moles (M_{y}) of the second anion (PF₆⁻) per mole of the heteroatom was determined.

Similarly, also in an electrochemical device at the end of charge which was charged until the voltage between terminals reached 3.8 V, an amount of the dopant contained in the positive electrode material layer was measured. And a number of moles of the first anion per mole of the heteroatom as M1 and a number of moles of the second anion per mole of the heteroatom as M2 were obtained.

Similarly, also in an electrochemical device at the end of discharge which was discharged until the voltage between terminals reached 2.5 V, an amount of the dopant contained in the positive electrode material layer was measured. And a number of moles of the first anion per mole of the heteroatom as M3 and a number of moles of the second anion per mole of the heteroatom as M4 were obtained.

An amount of sulfate ion (SO₄²⁻) was determined by measuring a concentration of the sulfate ion in an absorbing solution by ion chromatography, the absorbing solution being made by absorbing a gas generated in burning the positive electrode material layer. An amount of hexafluorophosphate anion (PF₆⁻) was determined by measuring a P (phosphorus) concentration of a solution by inductively coupled plasma (ICP) atomic emission spectrometry, the solution being made by dissolving the positive electrode material layer in a mixed acid (mixture of hydrochloric acid and nitric acid) by heating, allowing to cool, separating an insoluble matter by filtration to define a volume.

### <Reliability>

An initial capacity (Co) and internal resistance (Ro) of the electrochemical device were measured. Then, the electrochemical device was kept at 60°C for 1000 hours while applying a charge voltage of 3.5 V. After that, a capacitance (C₁) and internal resistance (R₁) of the electrochemical device were measured.

Table 1 shows results of the above evaluation.

**[Table 1]**

| | | A1 | A2 | B1 | B2 | B3 |
|---|---|---|---|---|---|---|
| SO₄²⁻ | 3.8V(M1) | 0.047 | 0.027 | 0 | 0.21 | 0.049 |
| | 3.2V(Mx) | 0.049 | 0.028 | 0 | 0.22 | 0.048 |
| | 2.5V(M3) | 0.045 | 0.028 | 0 | 0.21 | 0.044 |
| PF₆⁻ | 3.8V(M2) | 0.21 | 0.23 | 0.22 | 0.15 | 0.041 |
| | 3.2V(M_{y}) | 0.13 | 0.15 | 0.14 | 0.08 | 0.01 |
| | 2.5V(M4) | 0.02 | 0.01 | 0.01 | 0.01 | 0.01 |
| M1<M2? | | Yes | Yes | Yes | No | No |
| M3>M4? | | Yes | Yes | No | Yes | Yes |
| M2/M1 | | 4.47 | 8.52 | ∞ | 0.71 | 0.84 |
| Initial Stage | C₀(F) | 45 | 47 | 45 | 43 | 5 |
| | R₀(mΩ) | 100 | 95 | 97 | 95 | 725 |
| After Storing | C₁(F) | 41 | 43 | 13 | 25 | 4 |
| | R₁(mΩ) | 125 | 103 | 414 | 220 | 821 |

From Table 1, it became apparent that an electrochemical device excellent in both of initial characteristics and characteristics after keeping can be realized by satisfying both relationships of M1 < M2 and M3 > M4.

### INDUSTRIAL APPLICABILITY

The electrochemical device according to the present invention can be suitably applied to use which has a higher capacitance than that of the electric double layer capacitor and the lithium ion capacitor, and requires a higher output than that of the lithium ion secondary battery.

### REFERENCE MARKS IN THE DRAWINGS

10: group of electrodes
11: bottomed case
12: sealing body
14A, 14B: lead wire
15A, 15B: lead tab
21: positive electrode
22: negative electrode
23: separator
24: fastening tape

## Claims

1. An electrochemical device comprising:
a positive electrode (21) having a positive electrode material layer containing a conductive polymer doped with a first anion and a second anion;
a negative electrode (22) having a negative electrode material layer storing and releasing lithium ions; and
a nonaqueous electrolytic solution having lithium ionic conductivity,
wherein:
the second anion is more easily dedoped from the conductive polymer than the first anion,
**characterised in that**,
at an end period of charge of the electrochemical device, a number of moles M1 of the first anion and a number of moles M2 of the second anion respectively doped in the conductive polymer satisfy a relationship of M1 < M2, and
at an end period of discharge of the electrochemical device, a number of moles M3 of the first anion and a number of moles M4 of the second anion respectively doped in the conductive polymer satisfy a relationship of M3 > M4.

2. The electrochemical device according to claim 1, wherein:
the conductive polymer is a π-conjugated polymer having a repeating unit containing a heteroatom, and
a number of moles of the first anion doped in the conductive polymer per mole of the heteroatom is 0.1 moles or less.

3. The electrochemical device according to claim 1 or 2, wherein the conductive polymer is at least one selected from the group consisting of polypyrrole, polythiophene, polyfuran, polyaniline, polythiophene vinylene, polypyridine and derivatives thereof.

4. The electrochemical device according to any one of claims 1 to 3, wherein:
the first anion is an oxo acid anion not containing a halogen atom, and
the second anion is at least one selected from the group consisting of tetrafluoroborate anion, hexafluorophosphate anion, perchloric acid anion and bis(fluorosulfonyl)imide anion.

5. The electrochemical device according to any one of claims 1 to 4, wherein M2/M1 is 3 or more at an end period of charge of the electrochemical device.

6. A method for manufacturing an electrochemical device comprising:
a step of forming a positive electrode (21) having a positive electrode material layer containing a conductive polymer;
a step of forming a negative electrode (22) having a negative electrode material layer storing and releasing lithium ions; and
a step of immersing the positive electrode and the negative electrode in a nonaqueous electrolytic solution having lithium ionic conductivity,
wherein the step of forming a positive electrode (21) includes:
a step of polymerizing a polymerizable compound that is a raw material of the conductive polymer in a first solution containing a first anion so as to obtain the conductive polymer doped with the first anion; and
a step of doping a second anion in the conductive polymer doped with the first anion in a second solution containing the second anion that is more easily dedoped from the conductive polymer than the first anion, and
wherein the first anion and the second anion are doped so that:
a number of moles M1 of the first anion and a number of moles M2 of the second anion respectively doped in the conductive polymer satisfy a relationship of M1 < M2 at an end period of charge of the electrochemical device, and
a number of moles M3 of the first anion and a number of moles M4 of the second anion respectively doped in the conductive polymer satisfy a relationship of M3 > M4 at an end period of discharge of the electrochemical device.

7. A method for manufacturing an electrochemical device comprising:
a step of forming a positive electrode (21) having a positive electrode material layer containing a conductive polymer;
a step of forming a negative electrode (22) having a negative electrode material layer storing and releasing lithium ions; and
a step of immersing the positive electrode (21) and the negative electrode (22) in a nonaqueous electrolytic solution having lithium ionic conductivity,
wherein:
the step of forming a positive electrode (21) includes a step of polymerizing a polymerizable compound that is a raw material of the conductive polymer in a first solution containing a first anion so as to obtain the conductive polymer doped with the first anion,
the nonaqueous electrolytic solution contains a second anion that is more easily dedoped from the conductive polymer than the first anion,
the step of immersing the positive electrode and the negative electrode in the nonaqueous electrolytic solution includes a step of doping the second anion in the conductive polymer doped with the first anion in the nonaqueous electrolytic solution, and
wherein the first anion and the second anion are doped so that:
a number of moles M1 of the first anion and a number of moles M2 of the second anion respectively doped in the conductive polymer satisfy a relationship of M1 < M2 at an end period of charge of the electrochemical device, and
a number of moles M3 of the first anion and a number of moles M4 of the second anion respectively doped in the conductive polymer satisfy a relationship of M3 > M4 at an end period of discharge of the electrochemical device.

8. The method for manufacturing an electrochemical device according to claim 6 or 7, wherein obtaining the conductive polymer doped with the first anion has a step of removing part of the first anion from the conductive polymer doped with the first anion prior to the step of doping the second anion in the conductive polymer.

9. The method for manufacturing an electrochemical device according to any one of claims 6 to 8, wherein the conductive polymer is at least one selected from the group consisting of polypyrrole, polythiophene, polyfuran, polyaniline, polythiophene vinylene, polypyridine and derivatives thereof.

10. The method for manufacturing an electrochemical device according to any one of claims 6 to 9, wherein:
the first anion is an oxo acid anion not containing a halogen atom, and
the second anion is at least one selected from the group consisting of tetrafluoroborate anion, hexafluorophosphate anion, perchloric acid anion and bis(fluorosulfonyl)imide anion.

## Patentansprüche

1. Elektrochemische Vorrichtung umfassend:
eine positive Elektrode (21) mit einer positiven Elektrodenmaterialschicht, die ein leitfähiges Polymer enthält, das mit einem ersten Anion und einem zweiten Anion dotiert ist;
eine negative Elektrode (22) mit einer negativen Elektrodenmaterialschicht, die Lithiumionen speichert und freisetzt; und
eine nichtwässrige Elektrolytlösung mit Lithium-Ionenleitfähigkeit,
wobei:
das zweite Anion leichter aus dem leitfähigen Polymer dedotiert wird, als das erste Anion,
**dadurch gekennzeichnet, dass**
in einer Endperiode der Ladung der elektrochemischen Vorrichtung eine Anzahl Mole Ml des ersten Anions und eine Anzahl Mole M2 des zweiten Anions, die jeweils im leitfähigen Polymer dotiert sind, eine Ml < M2 Beziehung erfüllen, und
in einer Endperiode der Entladung der elektrochemischen Vorrichtung eine Anzahl Mole M3 des ersten Anions und eine Anzahl Mole M4 des zweiten Anions, die jeweils im leitfähigen Polymer dotiert sind, die M3 > M4 Beziehung erfüllen.

2. Elektrochemische Vorrichtung nach Anspruch 1, wobei:
das leitfähige Polymer ein π-konjugiertes Polymer mit einer sich wiederholenden Einheit ist, die ein Heteroatom enthält, und
eine Anzahl Mole des ersten Anions, das im leitfähigen Polymer dotiert ist und pro Mol des Heteroatoms 0,1 Mol oder weniger beträgt.

3. Elektrochemische Vorrichtung nach Anspruch 1 oder 2, wobei das leitfähige Polymer zumindest eines ist, das aus der Gruppe bestehend aus Polypyrrol, Polythiophen, Polyfuran, Polyanilin, Polythiophenvinylen, Polypyridin und deren Derivate ausgewählt ist.

4. Elektrochemische Vorrichtung nach einem beliebigen der vorstehenden Ansprüche 1 bis 3, wobei:
das erste Anion ein Oxo-Säureanion ist, das kein Halogenatom enthält, und
das zweite Anion zumindest eines ist, das aus der Gruppe bestehend aus Tetrafluoroborat-Anion, Hexafluorophosphat-Anion, Perchlorsäure-Anion und Bis(fluorsulfonyl)imid-Anion ausgewählt ist.

5. Elektrochemische Vorrichtung nach einem beliebigen der vorstehenden Ansprüche 1 bis 4, wobei M2/M1 in einer Endperiode der Ladung der elektrochemischen Vorrichtung 3 oder mehr beträgt.

6. Verfahren zur Herstellung einer elektrochemischen Vorrichtung, umfassend:
einen Schritt mit Bildung einer positiven Elektrode (21) mit einer positiven Elektrodenmaterialschicht, die ein leitfähiges Polymer enthält;
einen Schritt mit Bildung einer negativen Elektrode (22) mit einer negativen Elektrodenmaterialschicht, die Lithiumionen speichert und freisetzt; und
einen Schritt mit Eintauchen der positiven Elektrode und der negativen Elektrode in eine nichtwässrige Elektrolytlösung mit Lithium-Ionenleitfähigkeit,
wobei der Schritt mit Bildung einer positiven Elektrode (21) Folgende umfasst:
einen Schritt mit Polymerisieren einer polymerisierbaren Verbindung, die ein Rohstoff des leitfähigen Polymers in einer ersten Lösung ist, die ein erstes Anion enthält, um das leitfähige Polymer zu erhalten, das mit dem ersten Anion dotiert ist; und
einen Schritt mit Dotierung eines zweiten Anions im mit dem ersten Anion dotierten leitfähigen Polymer in einer zweiten Lösung, die das zweite Anion enthält, das leichter aus dem leitfähigen Polymer dedotiert wird, als das erste Anion, und
wobei das erste Anion und das zweite Anion so dotiert sind, dass:
eine Anzahl Mole Ml des ersten Anions und eine Anzahl Mole M2 des zweiten Anions, die jeweils im leitfähigen Polymer dotiert sind, die Beziehung Ml < M2 in einer Endperiode der Ladung der elektrochemischen Vorrichtung erfüllen, und
eine Anzahl Mole M3 des ersten Anions und eine Anzahl Mole M4 des zweiten Anions, die jeweils im leitfähigen Polymer dotiert sind, eine Beziehung M3 > M4 in einer Endperiode der Entladung der elektrochemischen Vorrichtung erfüllen.

7. Verfahren zur Herstellung einer elektrochemischen Vorrichtung, umfassend:
einen Schritt mit Bildung einer positiven Elektrode (21) mit einer positiven Elektrodenmaterialschicht, die ein leitfähiges Polymer enthält,
einen Schritt mit Bildung einer negativen Elektrode (22) mit einer negativen Elektrodenmaterialschicht, die Lithiumionen speichert und freisetzt; und
einen Schritt mit Eintauchen der positiven Elektrode (21) und der negativen Elektrode (22) in eine nichtwässrige Elektrolytlösung mit Lithium-Ionenleitfähigkeit,
wobei:
der Schritt mit Bildung einer positiven Elektrode (21) einen Schritt mit Polymerisieren einer polymerisierbaren Verbindung umfasst, die ein Rohstoff des leitfähigen Polymers in einer ersten Lösung ist, die ein erstes Anion enthält, um das leitfähige Polymer zu erhalten, das mit dem ersten Anion dotiert ist,
die nichtwässrige Elektrolytlösung ein zweites Anion enthält, das leichter aus dem leitfähigen Polymer dedotiert wird, als das erste Anion,
der Schritt mit Eintauchen der positiven Elektrode und der negativen Elektrode in die nichtwässrige Elektrolytlösung einen Schritt mit Dotieren des zweiten Anions im leitfähigen Polymer umfasst, das mit dem ersten Anion in der nichtwässrigen Elektrolytlösung dotiert ist, und
wobei das erste Anion und das zweite Anion so dotiert sind, dass:
eine Anzahl Mole M1 des ersten Anions und eine Anzahl Mole M2 des zweiten Anions, die jeweils im leitfähigen Polymer dotiert sind, eine Beziehung M1 < M2 in einer Endperiode der Ladung der elektrochemischen Vorrichtung erfüllen, und
eine Anzahl Mole M3 des ersten Anions und eine Anzahl Mole M4 des zweiten Anions, die jeweils im leitfähigen Polymer dotiert sind, eine Beziehung M3 > M4 in einer Endperiode der Entladung der elektrochemischen Vorrichtung erfüllen.

8. Verfahren zur Herstellung einer elektrochemischen Vorrichtung nach Anspruch 6 oder 7, wobei die Herstellung des mit dem ersten Anion dotierten leitfähigen Polymers einen Schritt mit Entfernen eines Teils des ersten Anions aus dem mit dem ersten Anion dotierten leitfähigen Polymer vor dem Schritt mit Dotieren des zweiten Anions im leitfähigen Polymer umfasst.

9. Verfahren zur Herstellung einer elektrochemischen Vorrichtung nach einem beliebigen der vorstehenden Ansprüche 6 bis 8, wobei das leitfähige Polymer zumindest eines ist, das aus der Gruppe bestehend aus Polypyrrol, Polythiophen, Polyfuran, Polyanilin, Polythiophenvinylen, Polypyridin und Derivaten ausgewählt ist.

10. Verfahren zur Herstellung einer elektrochemischen Vorrichtung nach einem beliebigen der vorstehenden Ansprüche 6 bis 9, wobei:
das erste Anion ein Oxo-Säureanion ist, das kein Halogenatom enthält, und
das zweite Anion zumindest eines ist, das aus der Gruppe bestehend aus Tetrafluoroborat-Anion, Hexafluorophosphat-Anion, Perchlorsäure-Anion und Bis(fluorosulfonyl)imid-Anion ausgewählt ist.

## Revendications

1. Dispositif électrochimique comprenant :
une électrode positive (21) ayant une couche de matériau d'électrode positive contenant un polymère conducteur dopé avec un premier anion et un deuxième anion ;
une électrode négative (22) ayant une couche de matériau d'électrode négative stockant et libérant des ions lithium ; et
une solution électrolytique non aqueuse ayant une conductivité des ions lithium,
dans lequel :
le deuxième anion est plus facilement dédopé du polymère conducteur que le premier anion,
**caractérisé en ce que**
à une période finale de charge du dispositif électrochimique, le nombre de moles M1 du premier anion et le nombre de moles M2 du deuxième anion respectivement dopés dans le polymère conducteur satisfont à la relation M1 < M2, et
à une période finale de décharge du dispositif électrochimique, le nombre de moles M3 du premier anion et le nombre de moles M4 du deuxième anion respectivement dopés dans le polymère conducteur satisfont à la relation M3 > M4.

2. Dispositif électrochimique selon la revendication 1, dans lequel :
le polymère conducteur est un polymère π-conjugué ayant un motif répétitif contenant un hétéroatome, et
le nombre de moles du premier anion dopé dans le polymère conducteur par mole de l'hétéroatome est de 0,1 mole ou moins.

3. Dispositif électrochimique selon la revendication 1 ou 2, dans lequel le polymère conducteur est au moins l'un choisi dans groupe constitué par le polyrrole, le polythiophène, le polyfurane, la polyaniline, le polythiophène-vinylène, la polypyridine, et leurs dérivés.

4. Dispositif électrochimique selon l'une quelconque des revendications 1 à 3, dans lequel :
le premier anion est un anion oxoacide ne contenant pas d'atome d'halogène, et
le deuxième anion est au moins l'un choisi dans le groupe constitué par l'anion tétrafluoroborate, l'anion hexafluorophosphate, l'anion acide perchlorique et l'anion bis(fluorosulfonyl) imide.

5. Dispositif électrochimique selon l'une quelconque des revendications 1 à 4, dans lequel M2/M1 vaut 3 ou plus à une période finale de charge du dispositif électrochimique.

6. Procédé pour fabriquer un dispositif électrochimique, comprenant :
une étape de formation d'une électrode positive (21) ayant une couche de matériau d'électrode positive contenant un polymère conducteur ;
une étape de formation d'une électrode négative (22) ayant une couche de matériau d'électrode négative stockant et libérant des ions lithium ; et
une étape d'immersion de l'électrode positive et de l'électrode négative dans une solution électrolytique non aqueuse ayant une conductivité des ions lithium,
dans lequel l'étape de formation d'une électrode positive (21) comprend :
une étape de polymérisation d'un composé polymérisable qui est une matière première du polymère conducteur dans une première solution contenant un premier anion de façon que soit obtenu le polymère conducteur dopé avec le premier anion ; et
une étape de dopage d'un deuxième anion dans le polymère conducteur dopé avec le premier anion dans une deuxième solution contenant le deuxième anion qui est plus facilement dédopé du polymère conducteur que le premier anion, et
dans lequel le premier anion et le deuxième anion sont dopés de façon que :
le nombre de moles M1 du premier anion et le nombre de moles M2 du deuxième anion respectivement dopés dans le polymère conducteur satisfassent à la relation M1 < M2 à une période finale de charge du dispositif électrochimique, et
le nombre de moles M3 du premier anion et le nombre de moles M4 du deuxième anion respectivement dopés dans le polymère conducteur satisfassent à la relation M3 > M4 à une période finale de décharge du dispositif électrochimique.

7. Procédé pour fabriquer un dispositif électrochimique, comprenant :
une étape de formation d'une électrode positive (21) ayant une couche de matériau d'électrode positive contenant un polymère conducteur ;
une étape de formation d'une électrode négative (22) ayant une couche de matériau d'électrode négative stockant et libérant des ions lithium ; et
une étape d'immersion de l'électrode positive (21) et de l'électrode négative (22) dans une solution électrolytique non aqueuse ayant une conductivité des ions lithium,
dans lequel :
l'étape de formation d'une électrode positive (21) comprend une étape de polymérisation d'un composé polymérisable qui est une matière première du polymère conducteur dans une première solution contenant un premier anion de façon que soit obtenu le polymère conducteur dopé avec le premier anion,
la solution électrolytique non aqueuse contient un deuxième anion qui est plus facilement dédopé du polymère conducteur que le premier anion,
l'étape d'immersion de l'électrode positive et de l'électrode négative dans la solution électrolytique non aqueuse comprend une étape de dopage du deuxième anion dans le polymère conducteur dopé avec le premier anion dans la solution électrolytique non aqueuse, et
dans lequel le premier anion et le deuxième anion sont dopés de façon que :
le nombre de moles M1 du premier anion et le nombre de moles M2 du deuxième anion respectivement dopés dans le polymère conducteur satisfassent à la relation M1 < M2 à une période finale de charge du dispositif électrochimique, et
le nombre de moles M3 du premier anion et le nombre de moles M4 du deuxième anion respectivement dopés dans le polymère conducteur satisfassent à la relation M3 > M4 à une période finale de décharge du dispositif électrochimique.

8. Procédé pour fabriquer un dispositif électrochimique selon la revendication 6 ou 7, dans lequel l'obtention du polymère conducteur dopé avec le premier anion a une étape de retrait d'une partie du premier anion à partir du polymère conducteur dopé avec le premier anion avant l'étape de dopage du deuxième anion dans le polymère conducteur.

9. Procédé pour fabriquer un dispositif électrochimique selon l'une quelconque des revendications 6 à 8, dans lequel le polymère conducteur est au moins l'un choisi dans groupe constitué par le polyrrole, le polythiophène, le polyfurane, la polyaniline, le polythiophène-vinylène, la polypyridine, et leurs dérivés.

10. Procédé pour fabriquer un dispositif électrochimique selon l'une quelconque des revendications 6 à 9, dans lequel :
le premier anion est un anion oxoacide ne contenant pas d'atome d'halogène, et
le deuxième anion est au moins l'un choisi dans le groupe constitué par l'anion tétrafluoroborate, l'anion hexafluorophosphate, l'anion acide perchlorique et l'anion bis(fluorosulfonyl) imide.
